(19) Europäisches Patentamt
European Patent Office
Office européen des brevets

(11) **EP 3 457 609 B1**

(12) **EUROPEAN PATENT SPECIFICATION**

(45) Date of publication and mention
of the grant of the patent:
**15.01.2020 Bulletin 2020/03**

(51) Int Cl.:
***H04L 1/20*** *(2006.01)*

(21) Application number: **17191626.5**

(22) Date of filing: **18.09.2017**

(54) **SYSTEM AND METHOD FOR COMPUTING OF ANOMALIES BASED ON FREQUENCY DRIVEN TRANSFORMATION AND COMPUTING OF NEW FEATURES BASED ON POINT ANOMALY DENSITY**

SYSTEM UND VERFAHREN ZUR BERECHNUNG VON ANOMALIEN BASIEREND AUF FREQUENZGETRIEBENER TRANSFORMATION UND BERECHNUNG NEUER MERKMALE BASIEREND AUF DER PUNKTANOMALIEDICHTE

SYSTÈME ET PROCÉDÉ DE CALCUL D'ANOMALIES SUR LA BASE D'UNE TRANSFORMATION ENTRAÎNÉE PAR LA FRÉQUENCE ET CALCUL DE NOUVELLES CARACTÉRISTIQUES SUR LA BASE DE LA DENSITÉ D'ANOMALIE DE POINT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2019 Bulletin 2019/12**

(73) Proprietor: **Deutsche Telekom AG**
**53113 Bonn (DE)**

(72) Inventors:
• **ROSHANDEL, Mehran**
**13591 Berlin (DE)**
• **TAJIK, Shahin**
**12105 Berlin (DE)**
• **LÖHLEIN, Bernhard**
**97837 Erlenbach (DE)**
• **KETABDAR, Hamed**
**10555 Berlin (DE)**
• **SCHÜSSLER, Martin**
**39291 Möser (DE)**

(74) Representative: **Vossius & Partner**
**Patentanwälte Rechtsanwälte mbB**
**Siebertstrasse 3**
**81675 München (DE)**

(56) References cited:
**US-A1- 2012 281 638    US-B1- 8 934 583**

**Description**

The invention relates to the field of information technology (IT) and in particular to the monitoring of an information technology infrastructure element.

Most modern IT systems are equipped with some kind of anomaly detection and reporting systems, since IT monitoring has become an important task to ensure long term stability of today's complex IT infrastructure. There are many traditional monitoring systems for detection of incidents. Normally they issue an alarm after an incident has happened.

It is important to detect and report incidents within an IT system in order to analyze a particular incident after the incident has occurred, since this may lead to the prevention of similar incidents in the future.

Conventional anomaly detection techniques use labeled time domain measurement data for training and evaluation. When provided with enough such data said systems employ either machine learning algorithms and/or manual programming to develop rules to detect and categorize point anomalies. Point anomalies are defined as a data instance that can be considered as anomalous with respect to the rest of the data.

Machine learning (ML) and pattern recognition techniques are common tools to detect anomalies in the behavior of a system. The advantage of such tools is the availability of many different algorithms which can be optimized to detect the anomalies in different scenarios. However, these tools, in particular the ML tools, require too much processing power and memory to operate in real time. Therefore, such resources are not available in real time monitoring systems, and ML techniques also cannot be suitable candidates to detect the anomalies in a system in real time and/or for small delay times.

On the other hand, most of the time the ML techniques and pattern recognition algorithms are modeling respective features in the time domain. However, the time domain gives only limited information about the signal and some incidents remain invisible in the time domain.

Moreover, not every point anomaly does indicate a real incident. In summary, conventional anomaly detection systems and methods are complex, slow, and require training data.

However, since most incidents in real world IT infrastructure do not suddenly appear within seconds or minutes, but rather slowly develop over the course of minutes or even hours it would even be more desirable to employ a system and method to detect an incident while it is developing or at least within a very short timeframe after it has started.

A wide variety of possible incident scenarios are possible including: hardware failures, e.g. originating in a backup robot, load balancer, CPU card, interface card, and/or switch port; software failures, e.g., originated in wrong configurations actions by IT administrators, a IP address not being configured correctly after IT maintenance, user rights were removed by mistake, wrong procedure while applying a software update and/or missed renewing of a contract for network connections; and/or overload situations, e.g., originated by a sales start of a new product in the online shop portal and/or overload of a hotline due to a IT service failure.

US 2012/281 638 A1 relates to a Bluetooth detection unit being implemented to minimize the time required for executing the inquiry and paging scan procedures on a Bluetooth device associated with a collocated WLAN device. The Bluetooth detection unit can execute concurrent background spectral scanning to detect Bluetooth control packets while the WLAN device is receiving WLAN packets.

US 8 934 583 B1 relates to a detect logic that is configured to, during a sample window, monitor a communication channel for an event in a signal, wherein monitoring the communication channel for the event includes incrementing a counter in response to a magnitude of the communication channel being greater than a first predetermined threshold, and provide a detection signal in response to the counter reaching a second predetermined threshold, wherein the detection signal indicates detection of the event in the signal.

It is an object of the present invention to provide an improved system and method for computing anomalies. This object is achieved with the subject-matter of the independent method claim 1 and independent system claim 8. The dependent claims relate to further aspects of the invention. Any references to embodiments and aspects not falling within the scope of the independent claims are to be regarded as referring to related examples useful for understanding the invention.

In one embodiment of this invention incidents are detected based on a density of point anomalies which are originated in the frequency domain. The measurement signal in the time domain is transformed to a frequency signal, preferably by employing of a sliding window and/or Discrete Fourier Transformation (DFT). Point anomalies in the frequency signal can be detected based on machine learning and statistical models. Based on a density of point anomalies in a predefined time interval, it can be decided whether these point anomalies are indicating an incident or not.

In one embodiment of this invention it is provided a method for learning the behavior of a changing energy content of the high frequency components of the measurement signal and detecting point anomalies, when the energy content values shows a derivation from learned thresholds.

In yet another embodiment of the invention a consolidation step is used to decide whether or not an increased density of point anomalies is an incident, when said density is beyond a density threshold for a determined interval.

Hereinafter, the system and method are described in terms of a single measurement signal, however, this reduction is merely to achieve a simplified description. Although not described in detail, the skilled person is able to perform the necessary modifications to the method to process any number of input signals, based on the provided description.

According to the invention a method for computing of anomalies based on frequency driven transformation of a at least one measured signal from a information technology infrastructure element is provided, wherein the measured signal is continuously processed as a digitized signal having a discrete number of measurement points, each measurement point having the same predetermined distance on a time axis and the digitized signal is transformed into a Fourier signal in a frequency space. The computing of anomalies comprises repeating the following steps:

a) calculating an energy content of a predetermined number of high frequency components of the Fourier signal,
b) determining whether or not a point anomaly has occurred based on a comparison of the calculated energy content with a learned threshold, and
c) storing a first predetermined number of calculated energy content, and
wherein the measured signal from the information technology infrastructure element is at least one selected from the following:
CPU Usage, Memory Usage, running processes, request time, and delay time.

In an aspect of the invention the learned threshold is an adaptive threshold formed based on a second predetermined number of previously calculated energy contents or a predetermined value as long as the number of stored calculated energy contents is smaller than the second predetermined number of previously calculated energy contents.

In an aspect of the invention the adaptive threshold is formed from an average over the second predetermined number of previously calculated energy contents.

In an aspect of the invention the adaptive threshold is adjusted based on a history of thresholds from a plurality predetermined time periods. The predetermined time period is preferably one hour.

In an aspect of the invention a low-pass filter is applied on the calculated energy content of the high frequency components.

In an aspect of the invention, in a consolidation step a point anomaly density over time is calculated and compared to at least one density threshold to determine a probability of a true incident in the information technology infrastructure element.

In an aspect of the invention the transformation into the frequency space is preformed using a discrete Fourier transform and/or the energy content is the sum of a predetermined number of calculated discrete Fourier components.

Furthermore, according to the invention a system for computing of anomalies based on frequency driven transformation of a at least one measured signal from a information technology infrastructure element is provided, wherein the measured signal is continuously processed as a digitized signal having a discrete number of measurement points, each measurement point having a same predetermined distance on a time axis and the digitized signal is transformed into a Fourier signal in a frequency space.

The system comprises

a) a calculation unit configured to calculate an energy content of a predetermined number of high frequency components of the Fourier signal,
b) a point anomaly detection unit configured to determine whether or not a point anomaly has occurred based on a comparison of the calculated energy content with a learned threshold, and
c) a storage unit configured to store a first predetermined number of calculated energy content, and wherein the measured signal from the information technology infrastructure element is at least one selected from the following: CPU Usage, Memory Usage, running processes, request time, and delay time.

In an aspect of the invention the system comprises a consolidation unit configured to calculate a point anomaly density over time, compare the point anomaly density over time to at least one density threshold, and to determine a probability of a true incident based on the comparison result.

In an aspect of the invention the system is configured to perform the method according to any one of the previous aspects.

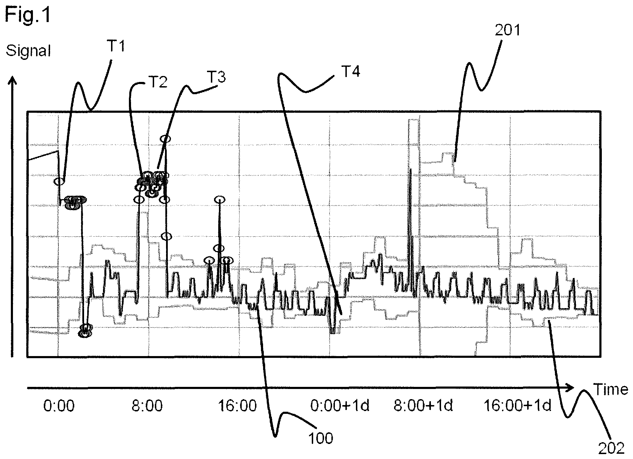

In Fig. 1 a measured time signal with an incident is shown.

To calculate a signal in the frequency domain from a discrete signal in time domain a variation of the discrete Fourier transform is used. In this technique a sliding window with a constant size is shifted one sample per time step, and a DFT is applied on the window to compute the amplitudes of a frequency spectrum.

Starting from a sequence of $N$ complex numbers $x_0,x_1,...,x_{n-1}$ in the time domain a DFT transforms them into a $N$-periodic sequence of complex numbers $X_0,X_1,...,X_{N-1}$ in the frequency domain:

$$X_k = \sum_{n=0}^{N-1} x_n . e^{-i2\pi kn/N}.$$

According to the invention a derivation from a learned threshold of the high frequency components in the spectrum indicates an abnormal behavior of the signal. This derivation from the learned thresholds can be due to many reasons such as sudden spikes, high oscillations in short periods, or unchanged values over long terms in time signal.

In order to compare the high frequency behavior of the signal with a threshold, the energy of a frequency signal can be calculated as follows:

$$E = \sum_{n=0}^{n-1}(X_n)^2.$$

The energy of high frequency components can be computed, e.g., by choosing only a summation over a few last components. However, the skilled person realizes that this is just one of many possible embodiments and the invention is not limited thereto. In particular other forms of summation and/or more sophisticated statistical methods, e.g., a center of gravity calculation may be performed to obtain a measure for the energy of the high frequency components.

In order to filter and consolidate found point anomalies according to the invention the point anomaly density over time is exploited to decide whether a particular point anomalies is pointing to an incident or not. If the density of point anomalies is higher than a threshold, the probability of their trueness becomes higher, and hence, it can be said that they indicate a true incident.

Fig.1 shows a measured time signal with an incident and several time points illustrating the performance of the anomaly detection system. Line 100 is the measured time signal. Lines 201 and 202, calculated from a history, relate are an upper and a lower threshold for an incident detection in the time domain.

At time T1 an anomaly detection system according to the invention detects an anomaly indicating an incident, in that particular measurement at T1 = 0:05 h. T2 indicates the start of an incident in the time domain, which has been determined a posteriori by a conventional monitoring system, in this particular measurement at T2= 7:00 h. T3 indicates the recognition of an incident by the conventional monitoring system, in this particular measurement at T3= 7:53 h, which is almost 8 hours after the anomaly detection system according to the invention has detected the first anomaly. Finally at T4 = 1:00 h (+1d) the incident has been solved in this particular measurement.

In summary, an anomaly detection method and system according to the invention allows for real time analysis of a signal from an information technology infrastructure element, such as a server, and for an early warning of an incident, thereby allowing for more efficient monitoring of an IT infrastructure and enabling a better maintenance of said infrastructure.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. Method for computing of anomalies based on frequency driven transformation of at least one measured signal (100) from a information technology infrastructure element,
   wherein the measured signal (100) is continuously processed as a digitized signal having a discrete number of measurement points, each measurement point having a same predetermined distance on a time axis and the digitized signal is transformed into a Fourier signal in a frequency space,
   wherein the computing of anomalies comprises repeating the following steps:

   a) calculating an energy content of a predetermined number of high frequency components of the Fourier signal,
   b) determining whether or not a point anomaly has occurred based on a comparison of the calculated energy content with a learned threshold, and
   c) storing a first predetermined number of calculated energy contents, and

   wherein the measured signal (100) from the information technology infrastructure element is one selected from the following:
   CPU Usage, Memory Usage and running processes

2. The method of claim 1, wherein the learned threshold (201, 202) is an adaptive threshold formed based on a second predetermined number of previously calculated energy contents or a predetermined value as long as the number of stored calculated energy contents is smaller than the second predetermined number of previously calculated energy contents.

3. The method of claim 2, wherein the adaptive threshold (201, 202) is formed from an average over the second predetermined number of previously calculated energy contents.

4. The method of any one of claims 1 to 3, wherein the adaptive threshold (201, 202) is adjusted based on a history of thresholds from a plurality predetermined time periods, wherein the predetermined time period is preferably one hour.

5. The method according to any one of claims 1 to 4, wherein a low-pass filter is applied on the calculated energy content of the high frequency components.

6. The method according to any one of claims 1 to 5, wherein in a consolidation step a point anomaly density over time is calculated and compared to at least one density threshold to determine a probability of a true incident in the information technology infrastructure element.

7. The method according to any one of claims 1 to 6, wherein the transformation into the frequency space is preformed using a discrete Fourier transform and/or the energy content is the sum of a predetermined number of calculated discrete Fourier components.

8. A system for computing of anomalies based on frequency driven transformation of at least one measured signal (100) from a information technology infrastructure element, wherein the measured signal (100) is continuously processed as a digitized signal having a discrete number of measurement points, each measurement point having a same predetermined distance on a time axis and the digitized signal is transformed into a Fourier signal in a frequency space,
wherein the system comprises

a) a calculation unit configured to calculate an energy content of a predetermined number of high frequency components of the Fourier signal,
b) a point anomaly detection unit configured to determine whether or not a point anomaly has occurred based on a comparison of the calculated energy content with a learned threshold, and
c) a storage unit configured to store a first predetermined number of calculated energy content, and

wherein the measured signal (100) from the information technology infrastructure element is one selected from the following:
CPU Usage, Memory Usage and running processes.

9. The system of claim 8, further comprising a consolidation unit configured to calculate a point anomaly density over time, compare the point anomaly density over time to at least one density threshold, and to determine a probability of a true incident based on the comparison result.

10. The system of claim 8 or 9, configured to perform the method according to any one of claims 2 to 5 and 7.

**Patentansprüche**

1. Verfahren zum Berechnen von Anomalien beruhend auf einer frequenzgetriebenen Transformation von mindestens einem Messsignal (100) aus einem Informationstechnologie-Infrastrukturelement,
wobei das Messsignal (100) kontinuierlich als ein digitalisiertes Signal verarbeitet wird, das eine diskrete Anzahl von Messpunkten aufweist, wobei jeder Messpunkt einen selben vorgegebenen Abstand auf einer Zeitachse aufweist und das digitalisierte Signal in ein Fourier-Signal in einem Frequenzraum transformiert wird,
wobei das Berechnen der Anomalien das Wiederholen der folgenden Schritte aufweist:

a) Berechnen eines Energiegehalts einer vorgegebenen Anzahl von Hochfrequenzkomponenten des Fourier-Signals,
b) Feststellen, ob eine Punktanomalie aufgetreten ist oder nicht, beruhend auf einem Vergleich des berechneten Energiegehalts mit einer erlernten Schwelle, und
c) Speichern einer ersten vorgegebenen Anzahl von berechneten Energiegehalten, und
wobei das Messsignal (100) aus dem Informationstechnologie-Infrastrukturelement eines ist, das aus dem Folgenden ausgewählt ist:
CPU-Nutzung, Speichernutzung und laufende Prozesse.

2. Verfahren nach Anspruch 1, wobei die erlernte Schwelle (201, 202) eine adaptive Schwelle, die beruhend auf einer zweiten vorgegebenen Anzahl von vorher berechneten Energiegehalten gebildet wird, oder ein vorgegebener Wert ist, so lange die Anzahl der gespeicherten berechneten Energiegehalte kleiner als die zweite vorgegebene Anzahl von vorher berechneten Energiegehalten ist.

3. Verfahren nach Anspruch 2, wobei die adaptive Schwelle (201, 202) aus einem Durchschnitt über die zweite vorgegebene Anzahl der vorher berechneten Energiegehalte gebildet wird.

4. Verfahren nach einem der Ansprüche 1 bis 3, wobei die adaptive Schwelle (201, 202) beruhend auf einem Verlauf der Schwellen aus mehreren vorgegebenen Zeitspannen eingestellt wird, wobei die vorgegebene Zeitspanne vorzugsweise eine Stunde ist.

**5.** Verfahren nach einem der Ansprüche 1 bis 4, wobei ein Tiefpassfilter auf den berechneten Energiegehalt der Hochfrequenzkomponenten angewendet wird.

**6.** Verfahren nach einem der Ansprüche 1 bis 5, wobei in einem Konsolidierungsschritt eine Punktanomaliedichte im Verlauf der Zeit berechnet und mit mindestens einer Dichteschwelle verglichen wird, um eine Wahrscheinlichkeit eines tatsächlichen Vorfalls im Informationstechnologie-Infrastrukturelement zu bestimmen.

**7.** Verfahren nach einem der Ansprüche 1 bis 6, wobei die Transformation in den Frequenzraum mittels einer diskreten Fourier-Transformation durchgeführt wird und/oder der Energiegehalt die Summe einer vorgegebenen Anzahl von berechneten diskreten Fourier-Komponenten ist.

**8.** System zum Berechnen von Anomalien beruhend auf einer frequenzgetriebenen Transformation von mindestens einem Messsignal (100) aus einem Informationstechnologie-Infrastrukturelement, wobei das Messsignal (100) kontinuierlich als ein digitalisiertes Signal verarbeitet wird, das eine diskrete Anzahl von Messpunkten aufweist, wobei jeder Messpunkt einen selben vorgegebenen Abstand auf einer Zeitachse aufweist und das digitalisierte Signal in ein Fourier-Signal in einem Frequenzraum transformiert wird, wobei das System aufweist

a) eine Berechnungseinheit, die konfiguriert ist, einen Energiegehalt einer vorgegebenen Anzahl von Hochfrequenzkomponenten des Fourier-Signals zu berechnen, b) eine Punktanomalie-Erfassungseinheit, die konfiguriert ist, beruhend auf einem Vergleich des berechneten Energiegehalts mit einer erlernten Schwelle festzustellen, ob eine Punktanomalie aufgetreten ist oder nicht, und c) eine Speichereinheit, die konfiguriert ist, eine erste vorgegebene Anzahl von berechneten Energiegehalten zu speichern, und wobei das Messsignal (100) aus dem Informationstechnologie-Infrastrukturelement eines ist, das aus dem Folgenden ausgewählt ist: CPU-Nutzung, Speichernutzung und laufende Prozesse.

**9.** System nach Anspruch 8, das ferner eine Konsolidierungseinheit aufweist, die konfiguriert ist, eine Punktanomaliedichte im Verlauf der Zeit zu berechnen, die Punktanomaliedichte im Verlauf der Zeit mit mindestens einer Dichteschwelle zu vergleichen und eine Wahrscheinlichkeit eines tatsächlichen Vorfalls beruhend auf dem Vergleichsergebnis zu bestimmen.

**10.** System nach Anspruch 8 oder 9, das konfiguriert ist, das Verfahren nach einem der Ansprüche 2 bis 5 und 7 auszuführen.

**Revendications**

**1.** Procédé de calcul d'anomalies sur la base d'une transformation commandée par la fréquence d'au moins un signal mesuré (100) à partir d'un élément d'infrastructure informatique, où le signal mesuré (100) est traité de manière continue en tant que signal numérisé ayant un nombre discret de points de mesure, chaque point de mesure présentant la même distance prédéfinie sur un axe temporel et le signal numérisé étant transformé en signal de Fourier dans un espace fréquentiel, où le calcul d'anomalies comprend la répétition des étapes suivantes :

a) calcul d'un contenu d'énergie d'un nombre prédéfini de composantes hautes fréquences du signal de Fourier, b) détermination si une anomalie de point s'est ou non produite sur la base d'une comparaison entre le contenu d'énergie calculé et un seuil appris, et c) mémorisation d'un premier nombre prédéfini de contenus d'énergie calculés, et

où le signal mesuré (100) à partir de l'élément d'infrastructure informatique est un signal sélectionné parmi : une utilisation CPU, une utilisation de mémoire et des processus en cours d'exécution.

**2.** Procédé selon la revendication 1, où le seuil appris (201, 202) est un seuil adaptatif formé sur la base d'un deuxième nombre prédéfini de contenus d'énergie précédemment calculés ou d'une valeur prédéfinie tant que le nombre de contenus d'énergie calculés mémorisés est inférieur au deuxième nombre prédéfini de contenus d'énergie précédemment calculés.

**3.** Procédé selon la revendication 2, où le seuil adaptatif (201, 202) est formé à partir d'une moyenne du deuxième nombre prédéfini de contenus d'énergie précédemment calculés.

**4.** Procédé selon l'une des revendications 1 à 3, où le seuil adaptatif (201, 202) est réglé sur la base d'un historique de seuils à partir d'une pluralité de périodes temporelles pré-définies, la période temporelle prédéfinie étant préférentiellement de une heure.

**5.** Procédé selon l'une des revendications 1 à 4, où un filtre passe-bas est appliqué au contenu d'énergie calculé des composantes hautes fréquences.

6. Procédé selon l'une des revendications 1 à 5, où, lors d'une étape de consolidation, une densité d'anomalies de point dans le temps est calculée et comparée à au moins un seuil de densité pour déterminer la probabilité d'un incident réel dans l'élément d'infrastructure informatique.

7. Procédé selon l'une des revendications 1 à 6, où la transformation en espace fréquentiel est exécutée au moyen d'une transformée de Fourier discrète et/ou le contenu d'énergie est la somme d'un nombre prédéfini de composantes de Fourier discrètes calculées.

8. Système pour le calcul d'anomalies sur la base d'une transformation commandée par la fréquence d'au moins un signal mesuré (100) à partir d'un élément d'infrastructure informatique, le signal mesuré (100) étant traité de manière continue en tant que signal numérisé ayant un nombre discret de points de mesure, chaque point de mesure présentant la même distance prédéfinie sur un axe temporel et le signal numérisé étant transformé en signal de Fourier dans un espace fréquentiel,
où ledit système comprend

    a) une unité de calcul prévue pour calculer un contenu d'énergie d'un nombre prédéfini de composantes hautes fréquences du signal de Fourier,
    b) une unité de détection d'anomalie de point prévue pour déterminer si une anomalie de point s'est ou non produite sur la base d'une comparaison entre le contenu d'énergie calculé et un seuil appris, et
    c) une unité de mémorisation prévue pour mémoriser un premier nombre prédéfini de contenu d'énergie calculé, et

où le signal mesuré (100) à partir de l'élément d'infrastructure informatique est un signal sélectionné parmi :
une utilisation CPU, une utilisation de mémoire et des processus en cours d'exécution.

9. Système selon la revendication 8, comprenant en outre une unité de consolidation prévue pour calculer une densité d'anomalies de point dans le temps, comparer ladite densité d'anomalies de point à au moins un seuil de densité, et pour déterminer la probabilité d'un incident réel sur la base du résultat de comparaison.

10. Système selon la revendication 8 ou la revendication 9, prévu pour exécuter le procédé selon l'une des revendications 2 à 5 et 7.

## Fig.1

**EP 3 457 609 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012281638 A1

- US 8934583 B1